(19) Europäisches Patentamt
European Patent Office
Office européen des brevets

(11) Veröffentlichungsnummer : **0 012 293**
**B1**

(12) # EUROPÄISCHE PATENTSCHRIFT

(45) Veröffentlichungstag der Patentschrift : **16.02.83**

(51) Int. Cl.³ : **C 08 G 59/54**

(21) Anmeldenummer : **79104805.1**

(22) Anmeldetag : **01.12.79**

(54) **Cyanethylierte Polyamidamine als Härter für Polyepoxide.**

(30) Priorität : **16.12.78 DE 2854436**

(43) Veröffentlichungstag der Anmeldung : **25.06.80 Patentblatt 80/13**

(45) Bekanntmachung des Hinweises auf die Patenterteilung : **16.02.83 Patentblatt 83/07**

(84) Benannte Vertragsstaaten : **CH DE FR GB IT NL**

(56) Entgegenhaltungen :
**DE A 2 164 099**
**DE A 2 214 064**
**DE B 1 022 004**
**DE B 1 034 856**
**DE B 1 124 688**
**US A 3 091 595**

**Die Akte enthält technische Angaben, die nach dem Eingang der Anmeldung eingereicht wurden und die nicht in dieser Patentschrift enthalten sind.**

(73) Patentinhaber : **BAYER AG**
**Zentralbereich Patente, Marken und Lizenzen**
**D-5090 Leverkusen 1, Bayerwerk (DE)**

(72) Erfinder : **Buysch, Hans-Josef, Dr.**
**Brandenburger Strasse 28**
**D-4150 Krefeld 1 (DE)**
Erfinder : **Gruber, Hermann, Dr.**
**Paul-Klee-Strasse 87**
**D-5090 Leverkusen (DE)**
Erfinder : **Wellner, Wolfgang, Dr.**
**Hahnenweg 8**
**D-5000 Köln 80 (DE)**
Erfinder : **Leiritz, Karl, Dr.**
**Hofstrasse 15**
**D-4019 Monheim (DE)**

**EP 0 012 293 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Cyanethylierte Polyamidamine als Härter für Polyepoxide

Die Erfindung betrifft neue Härtungsmittel für 1,2-Polyepoxide mit mehr als einer 1,2-Epoxidgruppe pro Molekül aus Umsetzungsprodukten von Lactamen mit Pentaethylenhexamin und Acrylnitril und/oder Methacrylnitril.

Es ist bekannt, aliphatische primäre und/oder sekundäre Di- oder Polyamine mit ε-Caprolactam zu Aminogruppen aufweisenden Polyamiden, vorzugsweise wenigstens zwei Amidgruppen und zwei primäre Aminogruppen aufweisenden Polyamiden, umzusetzen und diese erhaltenen Reaktionsprodukte als Härter für Polyepoxidharze zu verwenden (vgl. DE-AS 1 124 688 = US-PS 3 036 975). Wie aus den angegebenen Schriften ersichtlich, stellen die (ε-Caprolactam) Polyamidamine flüssige bzw. feste Verbindungen dar. Die flüssigen Produkte, abgemischt mit üblichen flüssigen Polyepoxidharzen z. B. auf Basis Bisphenol A (Epoxidäquivalent 175-210) können als Gießharze Verwendung finden und härten im-40-g-Ansatz innerhalb 40 Minuten ohne Wärmezufuhr. Zur Erzielung guter Wärmebeständigkeit und chemischer Beständigkeit müssen Formkörper aus diesen Mischungen jedoch mehrere Stunden bei Temperaturen von 120-150 °C nachgetempert werden. Ein großer Nachteil solcher Mischungen liegt darin, daß sie trotz ihrer hohen Reaktivität nicht als bei Raumtemperatur härtende Überzugsmittel eingesetzt werden können, da bei Raumtemperatur gehärtete Filme stumpf und klebrig bleiben. Auch aus flüssigen Amidanen und festem (höhermolekularen) Bisphenol-A-Epoxidharz hergestellte Mischungen, gelöst is einem Lösungsmittel, können laut Beispiel II dieser Schrift nur als bei ca. 120 °C einbrennbare Überzugsmittel verwendet werden. Das gleiche gilt für die festen Polyamidamine aus ε-Caprolactam. Den Schriften ist weiter zu entnehmen, daß Härtungsprodukte aus Epoxidharzen und Polyamidaminen auf Basis ε-Caprolactam + Polyamin blessere Wärmestandfestigkeiten und höhere Chemikalienbeständigkeit aufweisen als entsprechende Produkte mit Polyamidaminen auf Basis dimerisierter Fettsäuren und Polyamine.

Weiter ist es bekannt, primäre und/oder sekundäre Di- und/oder Polyamine, z. B. Ethylendiamin, Tetraethylenpentamin usw., mit Acrylnitril zu cyanethylierten Di- und Polyaminen umzusetzen (vgl. DE-AS 1 034 856 = US-PS 2 753 323) und die erhaltenen Umsetzungsprodukte als Härter für Polyepoxide mit mehr als einer 1,2-Epoxidgruppe pro Molekül einzusetzen. Ein wesentlicher Vorteil der cyanethylierten Amine liegt darin, daß sie, verglichen mit den Ausgangsaminen, eine verringerte Reaktivät gegenüber Epoxidverbindungen besitzen und somit eine höhere Gebrauchsdauer (pot life) aufweisen, d. h., die Zeitspanne zwischen dem Zeitpunkt der Zugabe des Härtungsmittels zum Polyepoxid und dem Zeitpunkt, an dem die Polyepoxid/Härter-Mischung nicht mehr verarbeitbar ist, wird vergrößert. Die Herabsetzung der Reaktivität ist umso größer, je mehr der ursprünglichen Aminwasserstoffatome cyanethyliert worden sind. Für die Herstellung großvolumiger Formkörper aus Polyepoxiden können cyanethylierte Polyamine mit Vorteil eingesetzt werden, wobei zur Erzielung guter mechanischer und elektrischer Eigenschaften allerdings bei erhöhten Temperaturen gehärtet wird. Von schwerwiegendem Nachteil ist jedoch die Tatsache, daß cyanethylierte Polyamine bei der Härtung von Polyepoxiden bei Raumtemperatur, insbesondere in dünnen Schichten, infolge atmosphärischer Einflüsse nicht genügend durchhärten, so daß auch nach vielen Tagen Härtungsdauer unansehnliche und klebrige Oberflächen erhalten werden. Das gleiche gilt für die nicht modifizierten Ausgangsamine, die, mit Polyepoxiden in dünnen Schichten bei Raumtemperatur gehärtet, trotz ihrer oft hohen Reaktivität, auch nach sehr langer Härtungsdauer schmierige und bläulich angelaufende Oberflächen aufweisen. Ferner ist es aus der US-PS 3 091 595 bekannt, Polyamidamine aus dimerisierten Fettsäuren und Polyaminen herzustellen und alle oder einen Teil der noch vorhandenen Aminowasserstoffatome mit Acrylnitril in cyanethylierte Polyamidamine zu überführen. Weder die Polyamidamine aus dimerisierten Fettsäuren und Polyaminen noch die mit Acrylnitril modifizierten Polyamidamine aus dimerisierten Fettsäuren und Polyaminen härten mit Polyepoxiden in dünner Schicht bei Raumtemperatur innerhalb 24 Stunden zu klaren, harten, klebfreien Filmen mit störungsfreier Oberfläche, wie aus dem Beispiel 1 der US-PS 3 091 595 und den Vergleichsversuchen in der vorliegenden Anmeldung hervorgeht.

Schließlich sind aus der DE-OS 2 164 099 Härtungsmittel für Polyepoxide mit mehr als einer 1,2-Epoxidgruppe bekannt, die aus Polyaminen der allgemeinen Formel

$$H(HN—R—)_m HN—R'—NH_2,$$

worin

m = 0-10

R und/oder R' unverzweigte und verzweigte Alkylenreste mit 2 bis 40 C-Atomen bedeuten, und Lactamen und (Meth)Acrylnitril hergestellt werden. Zwar fällt unter die größe Zahl der vorstehend formelmäßig angegebenen Polyamine auch Pentaethylenhexamin, jedoch läßt sich der genannten Offenelgungsschrift weder entnehmen, noch wird durch sie nahegelegt, daß cyanethylierte Polyamidamine auf Basis von Pentaethylenhexamin und Polyepoxide mit mindestens einer 1,2-Epoxidgruppe Härtungsprodukte ergeben, die unerwartete Vorteile aufweisen und eine erfinderische Tätigkeit begründen lassen.

Gegenstand der Erfindung sind daher

Härtungsmittel für Polyepoxide mit mehr als einer 1,2-Epoxidgruppe pro Molekül auf der Basis von Cyanethylierten Polyamidaminen aus polyaddierten Einheiten von

A. 1 Mol eines Polyamins der Formel

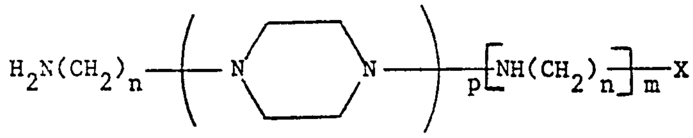

worin p = 0, n = 2 oder 3, m = 0 bis 6, X = $NH_2$ bzw.
p = 1, n = 2 oder 3, m = 0 und X = H bedeuten ;

B. 0,5-2,3 Mol eines gesättigten Lactams, und

C. 0,4-2,8 Mol Acrylnitril, Methacrylnitril oder deren Mischungen dadurch gekennzeichnet, daß das Polyamin Pentaethylenhexamin ist.

Als gesättigte Lactame kommen solche der nachstehenden Formel oder deren Mischungen in Frage :

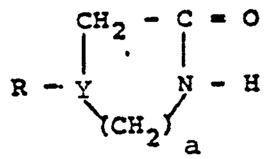

worin

Y für eine CH-Gruppe steht, wobei dann
R Wasserstoff und
a eine ganze Zahl von Null bis 9 bedeutet, oder
Y für ein Stickstoffatom steht, wobei dann
R einen gesättigten aliphatischen Rest, vorzugsweise Methyl, einen araliphatischen Rest mit 7-12 Kohlenstoffatomen oder einen Pyridinrest oder einen durch niedere Alkylreste ($C_1$-$C_4$) substituierten Pyridinrest und
a die Zahl 3 bedeuten.

Bevorzugte Lactame sind γ-Butyrolactam, δ-Valerolactam, ε-Caprolactam, Laurinlactam, insbesondere ε-Caprolactam. Anstelle der Lactame können zur Herstellung der Amidamine auch die den Lactamen zugrundeliegenden Aminocarbonsäuren eingesetzt werden.

Anstelle von Acrylnitril können auch Methacrylnitril oder Mischungen aus Acrylnitril und Methacrylnitril eingesetzt werden. Acrylnitril ist bevorzugt.

Die Herstellung der cyanethylierten Polyamidamine erfolgt unter an sich bekannten Verfahrensbedingungen. Die Lactame bzw. Aminocarbonsäuren werden bei Temperaturen zwischen 120 und 300 °C, vorzygsweise 150-280 °C, insbesondere bei 150-250 °C, mit den Polyalkenpolyaminen umgesetzt. Die Addition bzw. Kondensation kann rein thermisch oder säurekatalysiert erfolgen. Als Katalysatoren verwendet man, bezogen auf Lactam bzw. Aminocarbonsäure, zwischen 0,01-1 Gew.-% einer anorganischen oder organischen starken Säure wie Phosphorsäure, phosphorige Säure, Schwefelsäure, Salzsäure, Phenylphosphonsäure, Benzol- oder Toluolsulfonsäure. Die Reaktionszeit variiert zwischen ca. 30 Min. und mehreren Stunden und wird so gewählt, daß der Umsatz möglichst vollständig ist. Nicht umgesetzte Ausgangsmaterialien können durch Destillation abgetrennt werden. Dies ist jedoch im allgemeinen nicht erforderlich. Ein Vorteil der erfindungsgemäßen Produkte besteht u. a. darin, daß nicht umgesetzte Anteile insgesamt bis zu 40 Gew.-%, bezogen auf Ausgangsmaterialien, im Reaktionsgemisch Verbleiben können, ohne daß die Eigenschaften sich wesentlich ändern. Das Molverhältnis der eingesetzten Reaktionspartner entspricht normalerweise dem im Polyamidamin erwünschten Molverhältnis, also 0,5-2,3 Mol Lactam bzw. Aminosäure pro Mol Polyamin. Es kann allerdings auch größer oder kleiner sein. Doch muß dann das im Überschuß vorliegende Ausgangsmaterial vor der weiteren Umsetzung zumindest teilweise entfernt werden.

Die Addition von Acrylnitril bzw. Methacrylnitril oder deren Mischungen erfolgt bei 10 bis 180 °C, vorzugsweise bei 20-140 °C, insbesondere bei 30-120 °C. Die Nitrile werden in einer solchen Menge eingesetzt, wie es im erwünschten Endprodukt enthalten sein soll, also 0,4-2,8 Mol pro Mol Polyamin. Da die Additionsreaktion in der Regel exotherm Verläuft, wird (Meth)-Acrylnitril zweckmäßigerweise den Umsetzungsprodukten der Lactam- bzw. Aminosäuren mit den Polyaminen entsprechend der abzuführenden Wärmemenge zudosiert.

Die erfindungsgemäßen Härtungsmittel stellen Flüssigkeiten dar, die mit bis zu 20 Gew.-% eines geeigneten Verdünners wie Benzylalkohol zur weiteren Herabsetzung der Viskosität abgemischt werden können. Die Härtungsmittel besitzen Aminäquivalente (= NH-Äquivalent) von 60 bis 120, wobei unter Aminäquivalent der Quotient aus Molgewicht des Produktes und Anzahl der an Amin-Stickstoff gebundenen Wasserstoffatome zu verstehen ist. Ausgeschlossen sind Wasserstoffatome, die an Carbonylaminogruppen (—CO—NH—) gebunden sind.

Die erfindungsgemäßen Härtungsmittel können nicht nur wie übliche aliphatische Polyamine bzw. Polyamidamine zur Härtung von Polyepoxiden in der Wärme eingesetzt werden oder in großen Schichtdicken bei Raumtemperatur, sondern auch — und das ist der überraschende Vorteil gegenüber vergleichbaren Härtern aus Aminbasis — für die Härtung von Polyepoxiden in dünnen Schichten (unter 0,5 cm) bei Raumtemperatur, wobei innerhalb 24 Stunden klebfreie, staubtrockene, klare, glänzende Filme und Beschichtungen mit einwandfreier Oberfläche erhalten werden.

Pro Epoxidäquivalent können 0,6 bis 1,5, vorzugsweise 0,8 bis 1,2 Aminäquivalente (= NH-Äquivalente) der erfindungsgemäßen Härtungsmittel zur Härtung eingesetzt werden.

Unter dem Epoxidäquivalent wird die Menge an 1,2-Epoxidverbindung verstanden, in der eine 1,2-Epoxidgruppe enthalten ist. Entsprechend stellt der Epoxidwert die Anzahl von 1,2-Epoxidgruppen dar, die in 100 g Epoxidverbindung enthalten sind.

Als Epoxide kommen die bekannten, üblichen Polyepoxide mit mehr als einer 1,2-Epoxidgruppe in Frage. Das sind unter anderem Polyglycidylether mehrwertiger Phenole, beispielsweise aus Brenzkatechin, Resorcin, Hydrochinon, aus 4,4'-Dihydroxydiphenylmethan, aus 4,4'-Dihydroxy-3,3'-dimethyldiphenylmethan, aus 4,4'-Dihydroxydiphenyldimethylmethan (Bisphenol A), aus 4,4'-Dihydroxydiphenylmethylmethan, aus 4,4'-Dihydroxydiphenylcyclohexan, aus 4,4'-Dihydroxy-3,3'-dimethyldiphenylpropan, aus 4,4'-Dihydroxydiphenyl, aus 4,4'-Dihydroxydiphenylsulfon, aus Tris-(4-hydroxyphenyl)-methan, aus den Chlorierungs- und Bromierungsprodukten der vorstehend genannten Diphenole, insbesondere aus Bisphenol A ; aus Novolaken (d. h. aus Umsetzungsprodukten von ein- oder mehrwertigen Phenolen mit Aldehyden, insbesondere Formaldehyd, in Gegenwart saurer Katalysatoren), aus Diphenolen, die durch Veresterung von 2 Mol des Natriumsalzes einer aromatischen Oxicarbonsäure mit einem Mol eines Dihalogenalkans oder Dihalogendialkylethers erhalten wurden (vgl. britische Patentschrift 1 017 612), aus Polyphenolen, die durch Kondensation von Phenolen und langkettigen, mindestens 2 Halogenatome enthaltenden Halogenparaffinen erhalten wurden (vgl. britische Patentschrift 1 024 288).

Außer den Epoxyharzen auf Basis eines mehrwertigen Phenols und einer Chlorepoxyverbindung können auch die epoxydierten Ringverbindungen gemäß US-Patentschrift 2 716 123 verwendet werden.

Weiter seien genannt Glycidylether mehrwertiger Alkohole, beispielsweise aus 1,4-Butandiol, 1,4-Butendiol, Glycerin, Trimethylolpropan, Pentaerythrit und Polyethylenglykolen.

Von weiterem Interesse sind Triglycidylisocyanurat, N,N'-Diepoxypropyloxamid, Polyglycidylthioether aus mehrwertigen Thiolen, wie beispielsweise aus Bismercaptomethylbenzol, Diglycidyl-trimethylentrisulfon, epoxidiertes Polybutadien, epoxidiertes Leinöl, Vinylcyclohexendiepoxid.

Außerdem kommen in Frage : Glycidylester mehrwertiger aromatischer, aliphatischer und cycloaliphatischer Carbonsäuren, beispielsweise Phthalsäurediglycidylester, Terephthalsäurediglycidylester, Tetrahydrophthalsäurediglycidylester, Adipinsäure-diglycidylester, Hexahydrophthalsäurediglycidylester, die gegebenenfalls durch Methylgruppen substituiert sein können, und Glycidylester von Umsetzungsprodukten aus 1 Mol eines aromatischen oder cycloaliphatischen Dicarbonsäureanhydrids und 1/2 Mol eines Diols bzw. 1/n Mol eines Polyols mit n Hydroxylgruppen, etwa Glycidylcarbonsäureester der allgemeinen Formel

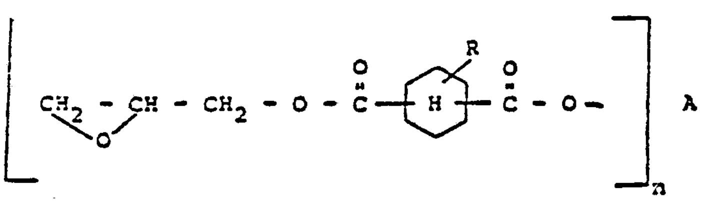

worin A einen mindestens 2-wertigen Rest eines gegebenenfalls durch Sauerstoff und/oder cycloaliphatische Ringe unterbrochenen, aliphatischen Kohlenwasserstoffs oder den 2-wertigen Rest eines cycloaliphatischen Kohlenwasserstoffs, R Wasserstoff oder Alkylreste mit 1-3 C-Atomen und n eine Zahl zwischen 2 bis 6 bedeuten, oder Mischungen von Glycidylcarbonsäureestern der angegebenen allgemeinen Formel (vgl. britische Patentschrift 1 220 702).

Von Interesse sind auch Epoxidharze, die mit Monocarbonsäuren umgesetzt wurden, insbesondere mit Fettsäuren, wie denjenigen aus Leinsamenöl, Sonnenblumenöl, Tallöl, Walnußöl, dehydratisiertes Ricinusöl, Heringöl u. dgl. Die Epoxidharze können in einfacher Weise verestert werden, indem man sie in Gegenwart von einer oder mehreren Carbonsäuren unter Rückflußkühlung erwärmt und das Wasser gleichzeitig azeotrop entfernt.

Bevorzugt sind Polyglycidylether mehrwertiger Phenole und mehrwertiger Alkohole sowie Glycidylester, insbesondere Polyepoxide auf Basis des Bisphenol A.

Die Harzkompositionen aus Härter und Epoxidkomponenten können zusätzlich Extender wie Cumaronöl, Verdünnungsmittel wie Dibutylphthalat enthalten, wenn sie auch vorzugsweise ohne solche eingesetzt werden, ferner Reaktivverdünner wie Monoglycidester oder Monoglycidether wie Umsetzungsprodukte von Phenolen mit Epichlorhydrin, Katalysatoren, die die Härtung beschleunigen, wie Alkohole, Phenole, tert. Amine oder organische Säuren wie Salicylsäure und Amine, Säuren wie $BF_3$ oder dessen

Addukte mit Alkoholen, Phosphorverbindungen wie Triphenylphosphit, Retarder, die die Aushärtung verzögern, wie Ketone oder Ester, und schließlich feste Zuschläge, Füllmaterialien und Verstärkungsstoffe wie Talkum, Quarzmehl, Titandioxid, Kieselgur, Schwerspat, Asbest, Glasfasern, Zinkstaub, Glimmer, Sikkative, Tixotropierungsmittel und Farbstoffpigmente wie Eisenoxid, Chromoxid und Cadmiumsulfid. Bei Außenanwendung können auch UV-Stabilisatoren zugesetzt werden.

Mit besonderem Vorteil finden die beschriebenen Systeme dort Anwendung, wo kalthärtende Epoxidharze in der Regel eingesetzt werden, z. B. für die Fertigung von Gießkörpeen und Harzmatten, besonders aber auf dem Beschichtungs- und Lackierungssektor.

Als zu überziehende bzw. zu beschichtende Substrate kommen Metalle, Holz, Papier, Kartonagen, Textilien, Leder, Glas, Kunststoffe, keramische Materialien u. a. in Frage.

Die in den Beispielen angegebenen Teile und Prozente beziehen sich auf das Gewicht, sofern nicht anders vermerkt.

Die in den Tabellen angegebene Reaktivität wird bestimmt, indem man 100 g des angegebenen Harz/Härter-Gemisches, wobei Polyepoxid und Amin-Härter in äquivalenten Mengen (1 Epoxydäquivalent = 1 NH-Äquivalent) eingesetzt werden, in einem 250 ml Becher bei Raumtemperatur (ca. 23 °C) sich selbst überläßt und den Temperaturanstieg feststellt. Die nach 20 Min. erreichte Temperatur ist jeweils in der Tabelle angegeben und stellt ein Maß für die Reaktivität des Harz/Härter-Gemisches und auch für den Härter dar. Wenn die Temperatur innerhalb 20 Minuten 50 °C übersteigt, ist die Gebrauchsdauer zu kurz. Eine derartige Mischung kann auch nicht zu kompakten, einwandfreien Formkörpern großer Schichtdicke (> mehrere cm) ausgefärtet werden, da es infolge der exothermen Reaktion zur Überhitzung der Reaktionsmischung kommen kann, die bis zur Verkohlung des Gießlings führen kann.

Die in den Beispielen angegebenen Auslaufviskositäten wurden nach DIN 53 211 im 6 mm Auslaufbecher gemessen.

Das in den Tabellen aufgeführte Epoxidharz I ist ein Bisphenol-A-Diglycidylether mit einem Epoxidwert von 0,55. Epoxidharz II stellt eine Mischung aus Epoxidharz I (70 Gew.-Teile) und 30 Gew.-Teilen tert.-Butylphenylglycidylether dar, wobei das zur Herstellung des tert.-Butylphenylglycidylethers eingesetzte tert.-Butylphenol ein technisches Gemisch aus ortho- und paratert.-Butylphenol ist. Das tert.-Butylphenol wird in bekannter Weise mit Epichlorhydrin in Gegenwart von Natronlauge zu Glycidylether umgesetzt. Der Epoxidwert des Epoxidharzes II ist 0,5.

Die in den Tabellen angegebenen Filmeigenschaften wurden an Filmen gemessen, die aus dem angegebenen Epoxid/Härter-Gemisch nach Auftragen in ca. 0,3 bis 0,5 mm dicker Schicht auf Glasplatten nach 24 Stunden Trocknung bei Raumtemperatur (ca. 23 °C) erhalten wurden. Epoxidharz und Härter wurden jeweils im äquivalenten Verhältnis eingesetzt.

Die Filme wurden nach folgenden Gesichtspunkten beurteilt: Klebfreiheit, Glanz, Härte (Kratzfestigkeit), Oberflächenstörungen (= Bloomingeffekt, wellenförmige Störungen, Orangenschaleneffekt) und Durchsichtigkeit.

Erste Voraussetzung für die Eignung eines Epoxidharzes bei Raumtemperatur ist natürlich die Klebfreiheit des Films (Oberfläche), die wie folgt ermittelt wurde:

Die Unterlage wird mit der Lackschicht nach oben auf eine tarierte Waage gelegt, die mit einem Gegengewicht von 1 kg belastet wird. Auf die Lackschicht wird ein kleiner, fettfreier Wattebausch von 2 bis 3 cm Durchmesser gelegt und auf diesen eine kleine Metallscheibe mit einem Durchmesser von 2 cm. Jetzt wird mit dem Finger auf die Scheibe gedrückt, bis die Waage im Gleichgewicht steht, und so wird die Waage während 10 sec. im Gleichgewicht gehalten. Nach Entfernen der Metallscheibe wird versucht, den Wattebausch durch sanftes Blasen zu entfernen. Die Lackschicht ist klebfrei, wenn der Bausch nicht mehr an der Lackschicht klebt und auch keine Härchen hinterbleiben.

Die Kratzfestigkeit einer Oberfläche wird mit Hilfe der Bleistifthärte ermittelt, wobei folgende Zuordnung gilt:

| Kratzfest | Bleistifthärte | | Größer HB |
|---|---|---|---|
| Nicht ganz kratzfest* | — | HB-B | |
| Weich | — | 2B-3B | |
| Sehr weich | — | | Größer 3B |

* Bzw. fast kratzfest.

## Beispiel 1

a) Ein Gemisch von 1 392 g (6 Mol) Pentaethylenhexamin (Molgewicht 232) und 678 g (6 Mol) ε-Caprolactam (Molgewicht 113) werden nach 10 h Kochen unter Stickstoff und Rühren bei einer Sumpftemperatur von 215-221 °C im Vakuum von nicht umgesetzten Ausgangsmaterialien befreit. Man erhält eine Fraktion (123-170 °C/1,599-0,933 mbar (1,2-0,7 Torr), 184 g), die im wesentlichen aus

ε-Caprolactam und eine Fraktion (182-202 °C/0.799 mbar (0,6 Torr), 430 g), die hauptsächlich aus Pentaethylenhexamin besteht. Beide Fraktionen können bei einem nachfolgenden Ansatz wieder als Ausgangsmaterial verwendet werden.

Der Rückstand der Destillation, das Reaktionsprodukt aus ε-Caprolactam und Pentaethylenhexamin = 1 355 g, stellt ein gelbliches Öl dar. Es besitzt eine Auslaufviskosität von 2'30" (= 2 Minuten 30 Sekunden) im 6 mm DIN Becher und ein NH-Äquivalent von 44. Aus vorstehendem Polyamidamin und Epoxidharzen I und II bei Raumtemperatur nach 24 Stunden Härtung erhaltene Filme besitzen die aus der Tabelle 1 unter 1a (Vergleich) ersichtlichen Eigenschaften.

b) Das Reaktionsprodukt aus ε-Caprolactam und Pentaethylenhexamin (gemäß Beispiel 1a) (1 355 g) wird bei 50-60 °C innerhalb 2 Stunden unter Rühren mit 412 g (7,8 Mol) Acrylnitril umgesetzt. Man erhält 1 756 g eines erfindungsgemäßen cyanethylierten Polyamidamins, das ein dickflüssiges gelbliches Öl mit einer Auslaufviskosität von 4'20" und einem NH-Äquivalent von 84 darstellt. Aus vorstehenden cyanethylierten Polyamidamin und Epoxidharzen I und II bei Raumtemperatur nach 24 Stunden Härtung erhaltene Filme besitzen die aus der Tabelle 1 unter 1b (Erfindung) ersichtlichen Eigenschaften.

c) Zum Vergleich mit dem erfindungsgemäßen Härter 1b wurden Pentaethylenhexamin (NH-Äquivalent 29, Auslaufviskosität im 6-mm-DIN-Becher 13 Sek) und Epoxidharz I bzw. II im äquivalenten Verhältnis vermischt und auf Glasplatten Filme gezogen. Nach 24 Stunden Härtung bei Raumtemperatur wurden die aus der Tabelle unter 1c ersichtlichen Filmeigenschaften erhalten.

d) Zum weiteren Vergleich wurden 232 g (1 Mol) Pentaethylenhexamin bei 50 °C mit 106 g (2 Mol) Acrylnitril unter Rühren in 1 Stunde umgesetzt. Man erhält ein gelbliches Öl der Auslaufviskosität 1 Min. und mit einem NH-Äquivalent von 56. Aus diesem Amin und Epoxidharzen I und II bei Raumtemperatur nach 24 Stunden Härtung erhaltene Filme besitzen die aus der Tabelle unter 1d (Vergleich) ersichtlichen Eigenschaften.

e) Ferner wurde ein cyanethyliertes Polyamidamin aus Sojaölfettsäure, Diethylentriamin und Acrylnitril gemäß Beispiel 1 der US-PS 3 091 595, (NH-Äquivalent 200, eine Auslaufviskosität im 6-mm-DIN-Becher konnte nicht mehr gemessen werden) mit Epoxidharz I im äquivalenten Verhältnis vermischt. Es wurden auf Glasplatten Filme gezogen und nach 24 Stunden Härtung bei Raumtemperatur die Filmeigenschaften geprüft. Siehe Tabelle 1 unter 1e (Vergleich).

f) Gemäß Beispiel 1 der US-PS 3 091 595 wurde cyanethyliertes Polyamidamin hergestellt, in dem das Diethylentriamin durch Pentaethylenhexamin ersetzt ist. NH-Äquivalent 127 ; eine Auslaufviskosität im 6-mm-DIN-Becher konnte nicht mehr gemessen werden. Aus diesem cyanethylierten Amidamin und Epoxidharz I bei Raumtemperatur nach 24 Stunden Härtung erhaltene Filme besitzen die aus der Tabelle 1 unter 1f (Vergleich) ersichtlichen Eigenschaften.

## Beispiel 2

a) Ein Gemisch von 4 176 g (18 Mol) Pentaethylenhexamin und 2 034 g (18 Mol) Caprolactam wird 10 Stunden unter Stickstoff und Rühren gekocht. Die Sumpftemperatur liegt bei 214-220 °C. Danach ist ein Umsatz von 80-83 %, bezogen auf eingesetztes Polyamin, erreicht. Auch in allen nachfolgenden Beispielen wird der Umsatz stets auf eingesetztes Polyamin bezogen.

b) 1 190 g dieses Reaktionsproduktes werden bei 50-60 °C unter Rühren innerhalb von 1 Stunde mit 372 g (6,9 Mol) Acrylnitril versetzt und noch eine halbe Stunde bei 50-60 °C gerührt. Das erfindungsgemäße Amin, ein gelbes Öl, besitzt ein NH-Äquivalent von 72 und eine Auslaufviskosität im 6-mm-DIN-Becher von 2'3". Aus diesem Amin und Epoxidharzen I und II bei Raumtemperatur nach 24 Stunden Härtung erhaltenen Filme besitzen die aus der Tabelle 1 unter 2b (Erfindung) ersichtlichen Eigenschaften.

## Beispiel 3

Ein Gemisch von 1296 g (5,55 Mol) Pentaethylenhexamin, 626 g (5,55 Mol) Caprolactam und 5,8 g p-Toluolsulfonsäure wird 5 Stunden bei 190 °C unter Stickstoff und Rühren erhitzt. Der Umsatz beträgt dann 92 %.

Das erhaltene schwach gelbe Öl wird anschließend bei 50-60 °C unter Rühren in 2 Stunden mit 600 g (11,3 Mol) Acrylnitril versetzt und eine weitere halbe Stunde unter diesen Reaktionsbedingungen gehalten. Die Auslaufviskosität (6-mm-DIN-Becher) beträgt 2'3" und das NH-Äquivalent 74. Aus diesem Amin und Epoxidharzen I und II bei Raumtemperatur nach 24 Stunden Härtezeit erhaltene Filme besitzen die in der Tabelle 1 unter 3 (Erfindung) angegebenen Eigenschaften.

## Beispiel 4

1 355 g des Polyamidamins, erhalten nach Beispiel 1a, werden mit 312 g (5,9 Mol) Acrylnitril unter den Bedingungen des Beispiels 1b umgesetzt. Man erhält ein gelbliches Öl, das ein NH-Äquivalent von 71 und eine Auslaufviskosität (6-mm-DIN-Becher) von 3' besitzt. Aus diesem Amin und Epoxidharzen I und II bei Raumtemperatur nach 24 Stunden Härtezeit erhaltene Filme besitzen die in der Tabelle unter 4 (Erfindung) angegebenen Eigenschaften.

Beispiel 5

Ein Gemisch von 696 g (3 Mol) Pentaethylenhexamin und 339 g (3 Mol) Caprolactam wird 12 h unter Rückfluß gekocht, wobei die Sumpftemperatur 221-235 °C beträgt. Umsatz : ca. 85-87 %. 345 g (1 Mol) des erhaltenen Polyamidamins werden mit 79,5 g (1,5 Mol) Acrylnitril wie in Beispiel 1b) umgesetzt. Man erhält ein gelbliches Öl mit einer Auslaufviskosität von 4'30" (6-mm-DIN-Becher) und einem NH-Äquivalent von 66. Aus diesem Amin und Epoxidharzen I und II bei Raumtemperatur nach 24 Stunden Härtezeit erhaltene Filme besitzen die in der Tabelle unter 5 (Erfindung) angegebenen Eigenschaften.

Tabelle 1

Filmeigenschaften nach 24 Stunden Härtezeit bei Raumtemperatur (Filmdicke 0,3 mm)

| Beispiel Nr. | Epoxidharz I Reaktivität | Epoxidharz I | Epoxidharz I Härte | Epoxidharz II Reaktivität | Epoxidharz II | Epoxidharz II Härte |
|---|---|---|---|---|---|---|
| 1a(Vergleich) | 55 | trübe, schmierig, klebrig | weich | 56 | trübe, schmierig, klebrig | weich |
| 1b(Erfindung) | 27 | glänzende, klebfreie, störungsfreie Oberfläche, klar | kratzfest | 27 | gländezende, klebfreie, störungsfreie Oberfläche, klar | nicht ganz kratzfest |
| 1c(Vergleich) | 57 | trübe, schmierig, starke Störungen | kratzfest | 58 | trübe, schmierig, starke Störungen | nicht ganz kratzfest |
| 1d(Vergleich) | 33 | nicht glänzende, klebrige Oberfläche mit starken Störungen, trübe | weich | 35 | nicht glänzende, klebrige Oberfläche mit starken Störungen, trübe | weich |
| 1e(Vergleich) | 29 | nicht glänzende, klebrige matte Oberfläche, stark trübe | sehr weich | 30 | nicht glänzend, klebrige matte Oberfläche, trübe | sehr weich |
| 1f(Vergleich) | 32 | schwach glänzed, stark klebrige Oberfläche, trübe | sehr weich | | schwach glänzende, stark klebrige Oberfläche, trübe | sehr weich |
| 2b(Erfindung) | 33 | glänzende, klebfreie, störungsfreie Oberfläche, klar | kratzfest | 32 | glänzende, klebfreie, störungsfreie Oberfläche, klar | nicht ganz kartzfest |
| 3 (Erfindung) | 35 | glänzende, klebfreie, störungsfreie Oberfläche, klar | kratzfest | 37 | glänzende, klebfreie, störungsfreie Oberfläche, klar | fast kratzfest |
| 4 (Erfindung) | 28 | glänzende, klebfreie Oberfläche mit sehr geringen Störungen, klar | kratzfest | 28 | glänzende, klebfreie Oberfläche mit geringen Störungen | fast kratzfest |
| 5 (Erfindung) | 31 | glänzende, klebfreie Oberfläche mit gerinden Störungen, klar | kratzfest | 32 | glänzende, kelbfreie Oberfläche mit geringen Störungen, klar | nicht ganz Kratzfest |

Ein Vergleich der Wertung der in der Tabelle 1 aufgeführten Eigenschaften zeigt, daß erfindungsgemäße cyanethylierte Polyamidamine und Polyepoxide in dünnen Schichten nach 24 Stunden Härtezeit glänzende, klare Filme mit klebfreien Filmoberflächen ohne bzw. mit nur geringfügigen Störungen ergeben, die in den meisten Fällen schon kratzfest sind. Demgegenüber werden mit den entsprechenden nicht cyanethylierten Polyamidaminen (Beispiel 1a), bzw. mit dem zur Herstellung des Polyamidamins eingesetzten Polyamin (Beispiel 1c) bzw. dem entsprechenden cyanethylierten Polyamin (Beispiel 1d) oder mit cyanethylierten Polyamidaminen gemäß US-PS 3 091 595 (Beispiele 1e und 1f) nach 24 Stunden Härtezeit bei Raumtemperatur Filme erhalten, die keine klebfreien und kratzfesten Oberflächen besitzen. In den meisten Fällen weisen die Vergleichsfilme Oberflächen mit starken Störungen auf und sind trübe. Diese Ergebnisse sind umso überraschender, als die Vergleichshärter in den meisten Fällen eine höhere Reaktivität besitzen.

Selbst wenn die erfindungsgemäßen Härtungsmittel nicht umgesetzte Ausgangsprodukte enthalten (Beispiele 2b, 3 und 5), ergeben sie, mit Polyepoxiden abgemischt, nach 24 Stunden Härtezeit glänzende, klebfreie, klare Filme ohne oder mit sehr geringen Oberflächenstörungen. Im Beispiel 4 wird erfindungsgemäßes Härtungsmittel eingesetzt, in dem der Cyanethylierungsgrad variiert worden ist.

Beispiel 6

a) Ein Gemisch von 232 g (1 Mol) Pentaethylenhexamin, 203 g (1,8 Mol) Caprolactam und 1,3 g p-Toluolsulfonsäure wird 8-10 Stunden bei 180 °C unter Stickstoff gerührt. Es resultiert ein gelbliches Ölt mit einer Auslaufviskosität im 6-mm-DIN-Becher von 4'20" und einem NH-Äquivalent von 54.

Die Filmeigenschaften sind der Tabelle 2 unter 6a (Vergleich) zu entnehmen.

Umsatz : ca. 71 %.

b) 435 g des Produktes nach 8a werden bei 50-60 °C mit 80 g (1,51 Mol) Acrylnitril quantitativ umgesetzt. Das erhaltene gelbliche Öl hat ein NH-Äquivalent von 79 und eine Auslaufviskosität im 6-mm-DIN-Becher von 5'7".

Die Filmeigenschaften sind der Tabelle 2 unter 6b (Erfindung) zu entnehmen.

c) Man verfährt wie unter b), setzt aber 106 g (2 Mol) Acrylnitril ein. Es entsteht ein gelbliches Öl mit der Auslaufviskosität von 5'50" im 6-mm-DIN-Becher und dem NH-Äquivalent von 90.

Die Filmeigenschaften sind der Tabelle 2 unter 6c (Erfindung) zu entnehmen.

Beispiel 7

a) Ein Gemisch von 58 g (0,25 Mol) Pentaethylenhexamin, 47 g (0,25 Mol) Tetraethylenpentamin, 37 g (0,25 Mol) Triethylentetramin, 26 g (0,25 Mol) Diethylentriamin, 124 g (1,1 Mol) Caprolactam und 0, 9 g p-Toluolsulfonsäure wird 6-7 Stunden auf 180-190 °C unter Rühren und Stickstoff erhitzt. Man erhält ein gelbliches Öl mit einem NH-Äquivalent von 45.

Der Umsatz betrug : ca. 85 %.

Die Filmeigenschaften sind der Tabelle 2 unter 7a (Vergleich) zu entnehmen.

b) 293 g des Reaktionsgemisches nach a) werden bei 60-70 °C mit 106 g (2 Mol) Acrylnitril quantitativ umgesetzt. Das ölige gelbliche Reaktionsprodukt besitzt eine Auslaufviskosität von 2'20" im 6-mm-DIN-Becher und ein NH-Äquivalent von 88.

Die Filmeigenschaften sind der Tabelle 2 unter 7b (Erfindung) zu entnehmen.

Tabelle 2

Filmeigenschaften nach 24 Stunden Härtezeit bei Raumtemperatur (Filmdicke 0,3 mm)

| Beispiel Nr. | Reaktivität | Epoxidharz I | Härte | Reaktivität | Epoxidharz II | Härte |
|---|---|---|---|---|---|---|
| 6a(Vergleich) | 54 | trübe, stark klebrige Oberfläche mit starken Störungen | weich | | | |
| 6b(Erfindung) | 35 | glänzende, klebfreie, störungsfreie Oberfläche, klar | kratzfest | 35 | glänzende, klebfreie, störungsfreie Oberfläche, klar | fast kratzfest |
| 6c(Erfindung) | 33 | glänzende, klebfreie Oberfläche mit sehr geringen Störungen, klar | kratzfest | 33 | glänzende, klebfreie Oberfläche mit geringen Störungen | fast kratzfest |
| 7a(Vergleich) | 48 | nicht glänzende, klebrige Oberfläche mit starken Störungen | weich | | | |
| 7b(Erfindung) | 32 | glänzende, klebfreie, störungsfreie Oberfläche, klar | kratzfest | 32 | glänzende, klebfreie, störungsfreie Oberfläche, klar | nicht ganz kratzfest |

**Anspruch**

Härtungsmittel für Polyepoxide mit mehr als einer 1,2-Epoxidgruppe pro Molekül auf der Basis von cyanethylierten Polyamidaminen aus polyaddierten Einheiten von

A. 1 Mol eines Polyamins der Formel

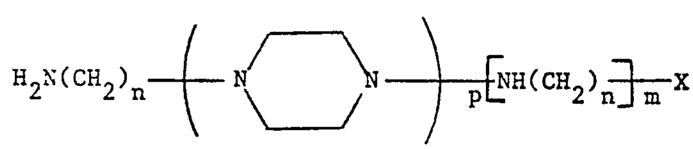

worin p = 0, n = 2 oder 3, m = 0 bis 6, X = $NH_2$ bzw.
p = 1, n = 2 oder 3, m = 0 und X = H bedeuten ;

B. 0,5-2,3 Mol eines gesättigten Lactams, und

C. 0,4-2,8 Mol Acrylnitril, Methacrylnitril oder deren Mischungen, dadurch gekennzeichnet, daß das Polyamin Pentaethylenhexamin ist.

**Claim**

A hardener for polyepoxides containing more than one 1,2-epoxide group per molecule based on cyanoethylated polyamide amines of polyadded units of

A. 1 mole of a polyamine of the formula

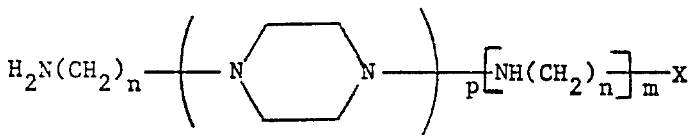

wherein p = 0, n = 2 or 3, m = 0 to 6 and X = $NH_2$ or
p = 2 or 3, m = 0 and X = H ;

B. 0.5-2.3 moles of a saturated lactam and

C. 0.4-2.8 moles of acrylonitrile, methacrylonitrile or mixtures thereof, characterised in that the polyamine is pentaethylene hexamine.

**Revendication**

Agent durcisseur pour polyépoxydes ayant plus d'un groupe 1,2-époxyde par molécule, à base de polyamide-amines cyanéthylées formées de motifs polyadditionnés de

A. 1 mole d'une polyamine de formule

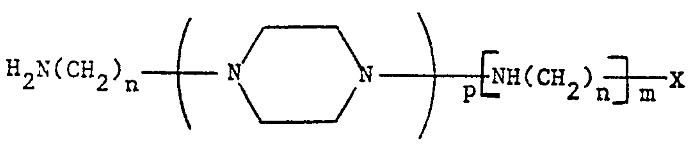

dans laquelle p = 0, n = 2 ou 3, m = 0 à 6, X = $NH_2$ ou
p = 1, n = 2 ou 3, m = 0 et X = H ;

B. 0,5 à 2,3 moles d'un lactame saturé, et

C. 0,4 à 2,8 moles d'acrylonitrile, de méthacrylonitrile ou de leurs mélanges, caractérisé en ce que la polyamine est la penta-éthylènehexamine.